# EUROPEAN PATENT SPECIFICATION

(11) **EP 2 330 856 B1**
(45) Date of publication and mention of the grant of the patent: **08.02.2012**
(21) Application number: 09290898.7
(22) Date of filing: 03.12.2009
(51) Int. Cl.: H04W 72/08, H04W 16/10

(54) **Interference coordination between cells of a radio network**
Interferenzkoordination zwischen Zellen von Funknetzwerken
Coordination d'interférence entre les cellules d'un réseau radio

(43) Date of publication of application: 08.06.2011
(73) Proprietor: Alcatel Lucent, 75008 Paris (FR)
(72) Inventor: Necker, Marc, 70565 Stuttgart (DE); Kaschub, Matthias, 72813 St. Johann (DE)
(74) Representative: Schmidt, Werner Karl

(56) References cited:
- WO-A2-2008/156417
- WO-A2-2008/157799
- WO-A2-2009/073744
- GB-A- 2 378 858

## Description

### Field of the Invention

The invention relates to the field of telecommunications, and, more specifically, to interference coordination of two or more neighboring cells of a radio network.

### Background

This section introduces aspects that may be helpful in facilitating a better understanding of the invention. Accordingly, the statements of this section are to be read in this light and are not to be understood as admissions about what is in the prior art or what is not in the prior art.

In radio communications networks, interfering signals generated by senders (typically mobile stations) arranged in different cells / cell sectors degrade the signal quality and limit the throughput. For mitigating this problem, interference coordination algorithms (IFCO) are used. Such algorithms coordinate transmissions from neighboring base stations / cells such that the overall interference, i.e. the Signal-to-Interference-Noise-Ratio, SINR, is improved. Typically, IFCO algorithms which try to minimize interference in the downlink are based on communications / signaling between the neighboring cells. However, such signaling causes an additional overhead which may lead to a reduction in network throughput, thus at least partially counteracting the increase of network throughput which is to be provided by the IFCO algorithms.

WO 2009/073744 A2 discloses the preamble of claim 1 and of claim 7.

GB 2 378 858 A discloses a method for minimization of interference in cellular communications systems by adjusting a beam pattern of an antenna of a base station using a down-tilt to give a desired attenuation level of the base station's carrier signal.

WO 2008/157799 A2 describes systems and methodologies that facilitate employing distributed frequency planning and reuse factor optimization based upon forward link and/or reverse link interference management techniques.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a method for interference coordination of a cell with at least one neighbouring cell of a radio network, the cell allowing to distribute its transmit power is a spatially resolved way, the method comprising: making a resource assignment to a mobile station located in the cell; deriving a measure for an interference level at the location of the mobile station based on information which is available in the cell, in particular based on feedback from the mobile station, the interference level being dependent on resource assignments in the at least one neighbouring cell; and deciding whether to keep or to change the current resource assignment for the mobile station based on the measure for the interference level, wherein the step of changing the resource assignment comprises swapping the current resource assignment of the mobile station with a resource assignment previously made to a further mobile station of the cell.

The present inventors propose to use a method which allows to perform interference coordination essentially without communication between neighboring cells / base stations. The method dynamically modifies scheduling and/or link adaptation in the cell and does not require and additional planning step during network planning. The relevant information for the method is typically already available in a singe cell (in the base station and/or the mobile stations associated with the base station), such that explicit communication (signaling) between the cells is not a pre-requisite for the method.

In a first step of the proposed method, a resource assignment for serving a mobile station on certain resources in the time and frequency domain (relative to a common scheduling interval) is made. The cell is adapted to perform the resource assignment to the mobile station depending on a spatial dimension. The cell, resp., the base station may use beamforming for this purpose. In this case, the resource assignment is directed to a sub-area of the cell where the mobile station is located, the sub-area essentially corresponding to a lobe generated by a beamforming antenna array with multiple antennas. It will be understood, however, that other ways of performing resource assignments in a spatially resolved way may be used, which may also allow to influence the spatial distribution of the transmit power and thus of the interference level within a cell. For instance, a mechanism may be used in which one out of a plurality of sets of pre-defined antenna weights is selected, each set of antenna weights generating a different distribution of the transmit power in the cell, the distribution typically not being directed to specific sub-areas of the cell where a mobile station is located.

After the first step, which is typically performed for each mobile station currently served by the cell, in a second step, a measure for an interference level at the location of the mobile station is derived based on information which is available in the cell. Typically, information about the interference level is already available in cells of current cellular radio technologies, or may be derived from the information which is available in these cells. In particular, feedback information about channel conditions and interference levels for previous transmissions which are reported from the mobile stations to the base station may be used for this purpose.

In a final step, a decision is made whether the resource assignment to the mobile stations will be kept or changed based on the derived measure for the interference level of the mobile stations. In general, the interference level of the cell should be kept as constant as possible. However, when the interference level of a particular assignment is too high, the assignment should be changed.

In this respect, it should be noted that keeping the interference level as constant as possible by keeping the assignment as constant as possible is important, as this is a pre-requisite for predicting the future interference situation. If the sum interference (overall interference) of the cell changes too quickly, it is difficult for the method to adapt to the conditions, i.e. to converge to a steady-state situation. Moreover, keeping the interference level as constant as possible has the additional advantage that the channel prediction for selecting the best modulation and coding scheme (AMC) will perform better due to the more constant SINR.

Thus, when making the decision, two contradicting principles have to be balance for achieving low interference and therefore high performance on the one hand, and fast convergence of the method / algorithm on the other hand. Those skilled in the art will appreciate that the decision whether to keep (i.e. to repeat) or to change the assignment is a scheduling decision (including subchannel assignments) which requires the definition of a scheduling cycle and a granularity inside this cycle which should be the same for all co-ordinated cells.

As indicated above, the step of changing the resource assignment comprises swapping the current resource assignment of the mobile station with a resource assignment previously made to a further mobile station of the cell. When a decision is made to change the resource assignment of a first mobile station, typically, the resources (typically one or more time x frequency blocks) assigned to that mobile station will be targeted to another (second) mobile station in a future scheduling cycle, the resources targeted to the second mobile station in the previous scheduling cycle being targeted to the first mobile station in the future scheduling cycle. By swapping the assignment in this way, the performance of the network may be increased beyond the statistical beamforming gain which may be achieved by beamforming without performing the interference coordination.

In one improvement, the further mobile station which is used for swapping the resource assignment with the mobile station is selected in a random way. Although it is desirable that the new assignment minimizes the overall interference level of the cell, as the information about the spatial distribution of the interference level across the cell (in particular differentiated with respect to the different time / frequency resources used) is typically not available, it is difficult to swap the assignment in a directed way, i.e. in a way which allows to guarantee that the overall interference level will be reduced / minimized. However, the inventors have found that even in a worst-case scenario, the swapping of resource assignments in a random way at least does not lead to an increase of the interference level in the cell.

In a further variant, the resource assignment is only changed when the measure for the interference level exceeds a threshold value. In this respect, although it is possible to change the assignment deterministically every time when the threshold value is exceeded, using some sort of randomization has been proven to be advantageous. Preferably, when the threshold value is exceeded, the resource assignment is not changed automatically, but with a probability which increases with increasing interference level. In this way, a fuzziness is introduced when performing the decision, typically increasing the convergence speed of the scheduling process described herein.

In another variant, the measure for the interference level is derived based on at least one parameter selected from the group consisting of: a sum interference (e.g in dBm), a signal-to-interference noise ratio, SINR, (e.g. in dB), in particular a difference between the sum interference and the SINR, and a signal strength within the cell. These and other parameters may be used as input parameters for a cost function which is used for mapping these input parameters to a measure for the interference level. Using the difference between sum interference and SINR as an input parameter has been shown to yield a considerably high performance gain. The input parameters which enter the cost function depend on the type of feedback signals which is provided by the mobile stations. For performing the decision, a current value of the measure of the interference level and/or the current values of the input parameters may be filtered, e.g. using a low-pass filter, to average out short-term variations which may e.g. be caused by a short-term change in the resource assignments of neighboring cells.

In a further variant, at least one parameter for making the decision, in particular a threshold value, is adjusted dynamically, the parameter being preferably adjusted based on an overall interference level of the cell. As a correct setting of the threshold value, respectively, a function for mapping the measure (cost value) for the interference level to a probability for changing the assignment is important for the performance of the algorithm, it is desirable to adjust the relevant parameter(s) dynamically, depending on the scenario. For this purpose, at least one parameter (in particular the threshold value) for performing the decision may be adjusted depending on an overall interference level of the cell. The overall (long-term) interference level of the cell may be determined by measuring and averaging the interference levels (resp., measures for the interference levels) of all mobile stations served by the cell over a longer time interval, e.g. multiple hours or days.

The advantage of this approach is that the overall long-term interference level may be measured directly based on information available in the cell, while the parameters that influence it, for example the distance between base stations or their average transmit power and the propagation properties which depend on geographical factors etc. do not need to be measured or considered directly, but their influence may still be taken into account and their influence may be compensated for. For example, the threshold value which serves as an offset for the decision whether or not the assignment has to be changed may be adjusted in dependence of the long-term average. The threshold value may, for instance, be chosen to correspond to the overall interference level in the cell plus an additional offset, the offset being constant or varying depending on the scenario. When adjusting the threshold value in the way described above, the function which maps the measure of the interference level to a probability whether to change the assignment is automatically adjusted to the interference conditions of the cell, such that the resource allocation may be adapted automatically, taking changes, e.g. the deployment of an additional neighboring cell, into account.

In a further variant, the method comprises: signaling information about a change of the resource assignment within the cell to at least one of the neighboring cells. As an extension of the method described above, explicit communication between neighboring base stations may be performed for further improving the performance of the interference coordination. In this case, the cells / base stations of the cells inform all of the neighboring cells when an assignment has been changed and for which resource partitions / resource blocks the change of the assignment has taken place. This is advantageous, as the method described herein works particularly well when the cells have knowledge about a permanent change of the interference situation of a certain resource partition. The notification from the neighboring cells may be used to partially discard the state of the low-pass filter mentioned above, and may cause subsequent measurements, i.e. measurements which are made after the change of assignment in the neighboring cell, to be weighted higher in estimating the current interference situation.

A further aspect of the invention relates to a base station for a wireless communication network, comprising: a transmitter unit for generating a cell defining an area of radio coverage for serving at least one mobile station, the transmitter unit allowing to distribute its transmit power in a spatially resolved way; a resource assignment unit for making a resource assignment to a mobile station arranged in the cell, a determining unit for determining a measure for an interference level at the location of the mobile station based on information which is available in the base station, in particular feedback information from the mobile station, the interference level being dependent on resource assignments in at least one neighbouring cell, and a decision unit for deciding whether to keep or to change the current resource assignment for the mobile station based on the measure for the interference level, wherein the resource assignment unit is adapted for changing the resource assignment by swapping the current resource assignment of the mobile station with a resource assignment previously made to a further mobile station of the cell.

The information required for determining (calculating) a measure for the interference level is typically available in the base station of conventional radio transmission standards, in particular in the form of feedback information from the mobile station(s).

Typically, more than one radio resource block (in the time and frequency domain) is assigned to a single mobile station, and the interference level in the mobile station may differ between the occupied resource blocks. However, for the present purposes, it is sufficient to deal with only a single interference level for each mobile station, typically being averaged over all resources attributed to the mobile station. One skilled in the art will appreciate that using two or more measures for interference levels of two or more groups of frequency resources attributed to a mobile station is also possible. In the latter case, only part of the resources attributed to the mobile station may be swapped when changing the assignment.

In one embodiment, the resource assignment unit is adapted for selecting the further mobile station which is used for swapping the resource assignment from a plurality of further mobile stations arranged in the cell in a random way. As described above, since the decision for swapping the resource assignment of a mobile station is only made when a high interference level for that assignment is detected, changing the resource assignment with the resource assignment of another (arbitrary) mobile station of the cell typically leads to a reduction of the interference level due to the changed distribution of the transmit power in the cell.

In another embodiment, the decision unit is adapted to change the resource assignment only when the measure for the interference level exceeds a threshold value, wherein, preferably, when the threshold value is exceeded, the resource assignment is changed with a probability which increases with increasing (measure for the) interference level. As stated above, performing the decision in a non-deterministic way has been proven to be of advantage.

In one embodiment, the measure for the interference level is determined based on at least one parameter selected from the group consisting of: a sum interference, a signal-to-interference noise ratio, SINR, in particular a difference between the sum interference and the SINR, and a signal strength within the cell. The measure for the interference level is determined using a cost function which is based on the above and/or further input parameters, a cost value thus determined being a measure for the interference level.

In another embodiment, the decision unit is adapted for dynamically adjusting at least one parameter for making the decision, in particular a threshold value, the parameter being preferably adjusted based on an overall interference level of the cell. In this case, an automatic adjustment to different deployment scenarios of the cells can be achieved.

A further aspect of the invention relates to a wireless communication network comprising at least two base stations of the type described above. In such a network, the cells associated with the base stations may perform interference coordination in the way described above, thus increasing the network throughput and thus the network performance.

In one improvement, the base stations of the wireless network are adapted for exchanging information about a change of the resource assignment within the associated cells, the information being taken into account for deriving the measure(s) for the interference level(s) of the respective sub-area(s). As the algorithm described herein tries to keep the resource assignments of the cells as constant as possible, changes of the assignment only occur with a comparatively low frequency, such that the signaling overhead between the cells is low as compared to other resource coordination algorithms,

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:

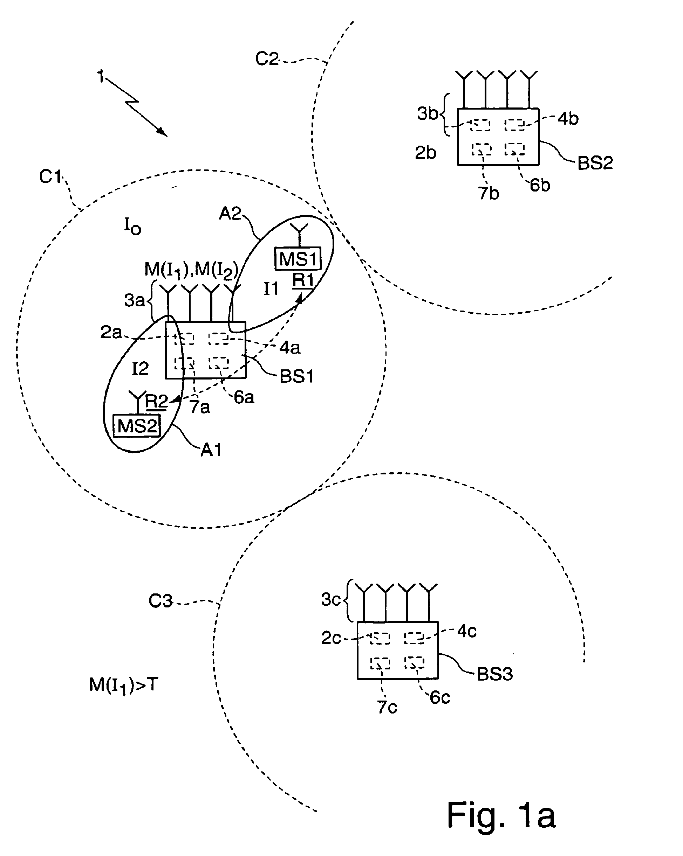

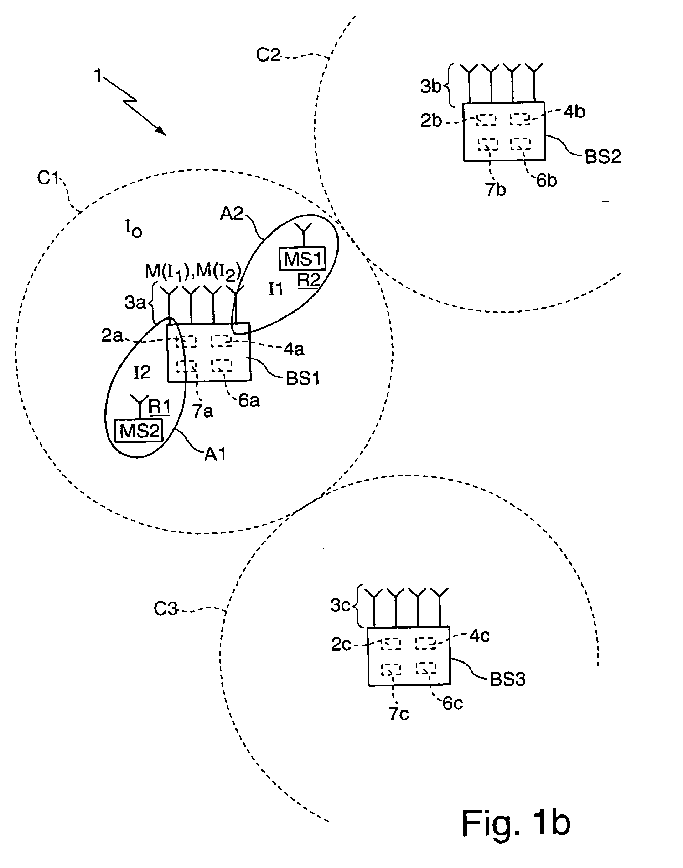

- **Figs. 1a,b**: shows a schematic diagram of an embodiment of a wireless communication network according to the invention, before and after changing a resource assignment.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

**Fig. 1a** shows a wireless communication network **1** with three cells C1 to C3 forming an area of radio coverage centered about a respective base station **BS1** to **BS3.** The base stations BS1 to BS3 each comprise a transmitter unit **2a** to **2c** which has an antenna array **3a** to **3c** with a plurality of transmit antennas being adapted for performing beamforming in a way known in the art.

As the base stations BS1 to BS3 are of identical construction, in the following, their functional elements will only be described with respect to the first base station BS1. The first base station BS1 comprises a resource assignment unit (scheduling unit) **4a,** being adapted for assigning a resource **R1, R2** to a respective sub-area **A1, A2** of the first cell C1, the sub-areas A1, A2 corresponding to two transmission lobes which are generated by the antenna array 3a by adequately adjusting antenna weights for the beamforming, such that two mobile stations **MS1, MS2** which are served by the first cell C1 are located in the sub-areas A1, A2, respectively. Those skilled in the art will appreciate that typically more than two mobile stations MS1, MS2 will be served by the cell C1. Also, even though each sub-area A1, A2 is normally chosen such that only one mobile station MS1, MS2 is located therein, it may also be possible that two or more mobile stations are located in the same sub-area. As in the present example, there is a one-to-one correspondence of mobile stations MS1, MS2 to sub-areas A1, A2, in the following description, the resource assignment will be described with reference to the sub-areas A1, A2.

For performing resource coordination of the first cell C1 with its neighboring cells C2, C3, the base station BS1 comprises a determining unit **6a** for determining a measure **M(11), M(I2)** for an interference level **11, I2** in a respective sub-area A1, A2. The interference level I1, I2 in the sub-areas A1, A2 is dependent on resource assignments in the neighbouring cells C2, C3 and changes, e.g., when new resource assignments are made in these cells C2, C3. For deriving a measure M(I1), M(I2) for the interference I1, I2 in the sub-areas A1, A2, feedback signals from the mobile stations MS1, MS2 located in the sub-areas A1, A2 are used.

These feedback signals may include one or more parameters selected from the group consisting of: a sum interference, a signal-to-interference noise ratio, SINR, in particular a difference between the sum interference and the SINR, and a signal strength within the cell C1. It will be understood that the above parameters (and possibly further parameters) do not necessarily have to be included in the feedback signals, it being sufficient that these parameters may be derived from the feedback signals in the base station BS1, resp., in the determining unit 6a.

Based on one or more of the input parameters, a cost function is used by the determining unit 6a, the cost function mapping the input parameters to the measure M(11), M(12) for the interference level I1, I2 in a respective sub-area A1, A2. For performing the mapping, a time average of either the input parameters or the measure M(I1), M(I2) for the interference level I1, I2 is calculated, e.g. using an (analog or digital) low-pass filter, such that rapid changes of the interference level I1, I2 may be averaged out.

For deciding whether the current resource assignment to the mobile stations MS1, MS2 should be kept (repeatedly applied), or changed, a decision unit **7a** is arranged in the base station BS1. The decision unit 7a is adapted to make the decision by comparing the measure M(I1), M(I2) for the interference level 11, 12 of a respective sub-area A1, A2 to a threshold value **T.**

As long as the measure M(I1), M(I2) is smaller than the threshold value T, the current resource assignment of the cell C1 is repeated. When the measure M(I1), M(I2) for the interference level 11, 12 of one of the sub-areas A1, A2 exceeds the threshold value T, the assignment may - but is not necessarily - changed, as in the present example, exceeding the threshold does not lead to an immediate (deterministic) change of the resource assignment. Rather, when the threshold T is exceeded, the assignment is changed with a probability which increases with increasing interference level I1, I2, thus introducing a form of fuzziness for the decision. In other words, once the threshold value is exceeded, the larger the difference between the (measure for the) interference level and the threshold value, the higher the probability that the assignment will be changed.

When it is decided that the resource assignment has to be changed, the resource assignment unit 4a switches the assignment, e.g. by swapping the resource assignment between the first and second sub-areas A1, A2. In other words, in a future resource assignment, the resources R1 attributed to the first sub-area A1 will be attributed to the second sub-area A2, and vice versa, as can be gathered from Figs. 1 a and 1b, showing the radio network 1 before and after the swapping of the resources R1, R2. It will be understood that whenever a change of the resource assignment becomes necessary, it is is desirable to use a new resource assignment which minimizes (a measure for) a current overall interference level Iₒ of the cell C1. Consequently, for swapping the assignment, it is desirable to select that one of the further mobile stations of the cell C1 which allows to minimize the overall interference level Iₒ.

However, the information about the spatial distribution of the interference level within the cell C1, in particular differentiated to the different occupied resources, is in general not available. Therefore, it is proposed to swap the resources R1 attributed to the first mobile station MS1 / sub-area A1 with the resources R2 of a second mobile station MS2 / sub-area A2 which is selected in a random way from a plurality of further mobile stations (not shown) being present in the cell C1.

When following the above approach, it is desirable to dynamically adjust the parameter(s) which influence the decision in dependence e.g. of the deployment scenario of the coordinated cells. In this respect, in particular the threshold value T may be adjusted dynamically, e.g. based on the overall interference level Iₒ of the cell C1. The overall interference level Iₒ may be determined by measuring and averaging the interference levels I1, I2 (resp., measures M(I1), M(I2) for the interference levels I1, I2) of all mobile stations MS1, MS2 served by the cell C1 over a longer time interval, e.g. multiple hours or days. Once the average overall interference level Iₒ is determined, the threshold value T may be fixed such that only interference levels I1, I2 which show a considerable deviation from the average overall interference level Iₒ will lead to a change of the resource assignment.

A further enhancement of the approach described above uses additional explicit communications between the neighboring base stations BS1 to BS3. In this case, the cells C1 to C3, resp., the base stations BS1 to BS3 inform all of the neighboring cells when an assignment has been changed and for which resource partitions / resource blocks the assignment has been changed. This is advantageous, as the approach described herein is particularly well-suited for a situation in which the cells have knowledge about a permanent change of the interference situation of a certain resource partition / block. The notification from the neighboring cells may be used to partially discard the state of the low-pass filter when determining the measure M(I1), M(I2) from the input parameters, and may cause further measurements to be weighted higher in estimating the current interference situation.

In summary, by using the above approach, network performance, in particular network throughput, may be increased beyond the statistical beamforming gain provided by the multiple antennas of the base stations without coordination. Moreover, the above concept may be implemented in future self-adjusting or self-configuring networks, as, typically, no additional planning step is needed. One skilled in the art will appreciate that although in the present example, beamforming is used for directing the transmit power to the mobile stations, other ways of distributing the transmit power in a spatially resolved way do exist. In particular, it is not necessary to direct the transmit power to sub-areas where the mobile stations are located, as, for the present purposes, even a non-directed change of the spatial distribution of the transmit power will be sufficient.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for interference coordination of a cell (C1) with at least one neighbouring cell (C2, C3) of a radio network (1), the cell (C1) allowing to distribute its transmit power is a spatially resolved way,
the method comprising:
making a resource assignment (R1, R2) to a mobile station (MS1, MS2) located in the cell (C1),
determining a measure (M(I1), M(12)) for an interference level (I1, I2) at a location of the mobile station (MS1, MS2) based on information which is available in the cell (C1), in particular based on feedback from the mobile station (MS1, MS2), the interference level (I1, I2) being dependent on resource assignments in the at least one neighbouring cell (C2, C3), and
deciding whether to keep or to change the current resource assignment (R1, R2) for the mobile station (MS1, MS2) based on the measure (M(I1), M(I2)) for the interference level (I1, I2),
**characterized in that**
the step of changing the resource assignment (R1, R2) comprises swapping the current resource assignment (R1) of the mobile station (MS1) with a resource assignment (R2) previously made to a further mobile station (MS2) of the cell (C1).

2. Method according to claim 1, wherein the further mobile station (MS2) which is used for swapping the resource assignment (R1) is selected in a random way.

3. Method according to any one of the preceding claims, wherein the resource assignment (R1, R2) is only changed when the measure (M(I1), M(I2)) of the interference level (I1, I2) exceeds a threshold value (T), wherein, preferably, when the threshold value (T) is exceeded, the resource assignment (R1, R2) is changed with a probability which increases with increasing interference level (I1, I2).

4. Method according to claim 3, wherein the measure (M(I1), M(I2)) for the interference level (I1, I2) is determined based on at least one parameter selected from the group consisting of: a sum interference, a signal-to-interference noise ratio, SINR, in particular a difference between the sum interference and the SINR, and a signal strength within the cell (C1).

5. Method according to any one of the preceding claims, wherein at least one parameter for making the decision, in particular a threshold value (T), is adjusted dynamically, the parameter being preferably adjusted based on an overall interference level (Iₒ) of the cell (C1).

6. Method according to any one of the preceding claims, further comprising:
signaling information about a change of the resource assignment (R1, R2) within the cell (C1) to at least one of the neighboring cells (C2, C3).

7. Base station (BS1) for a wireless communication network (1), comprising:
a transmitter unit (2a) for generating a cell (C1) defining an area of radio coverage for serving at least one mobile station (MS1, MS2), the transmitter unit (2a) allowing to distribute its transmit power in a spatially resolved way,
a resource assignment unit (4a) for making a resource assignment (R1, R2) to a mobile station (MS1, MS2) arranged in the cell (C1),
a determining unit (6a) for determining a measure (M(I1), M(I2)) for an interference level (I1, I2) at the location of the mobile station (MS1, MS2) based on information which is available in the base station (BS1), in particular feedback information from the mobile station (MS1, MS2), the interference level (I1, I2) being dependent on resource assignments in at least one neighbouring cell (C2, C3), and
a decision unit (7a) for deciding whether to keep or to change the current resource assignment (R1, R2) for the mobile station (MS1) based on the measure (M(I1), M(12)) for the interference level (I1, I2)
**characterized in that**
the resource assignment unit (4a) is adapted for changing the resource assignment (R1, R2) by swapping the current resource assignment (R1) of the mobile station (MS1) with a resource assignment (R2) previously made to a further mobile station (MS2) of the cell (C1).

8. Base station according to claim 7, wherein the resource assignment unit (4a) is adapted for selecting the further mobile station (MS2) which is used for swapping the resource assignment (R1) in a random way.

9. Base station according to any one of claims 7 to 8, wherein the decision unit (7a) is adapted to change the resource assignment only when the measure (M(I1), M(12)) for the interference level (I1, I2) exceeds a threshold value (T), wherein, preferably, when the threshold value (T) is exceeded, the resource assignment (R1, R2) is changed with a probability which increases with increasing interference level (I1, I2).

10. Base station according to claim 9, wherein the measure (M(I1), M(12)) for the interference level (I1, I2) is determined based on at least one parameter selected from the group consisting of: a sum interference, a signal-to-interference noise ratio, SINR, in particular a difference between the sum interference and the SINR, and a signal strength within the cell (C1).

11. Base station according to any one of claims 7 to 10, wherein the decision unit (7a) is adapted for dynamically adjusting at least one parameter for making the decision, in particular a threshold value (T), the parameter being preferably adjusted based on an overall interference level (Iₒ) of the cell (C1).

12. Radio network (1) comprising at least two base stations (BS1 to BS3) according to any one of claims 7 to 11.

13. Radio network according to claim 12, wherein the base stations (BS1 to BS3) are adapted for exchanging information about a change of the resource assignment (R1, R2) in the associated cells (C1 to C3), the information being taken into account for determining the measure (M(I1), M(I2)) for the interference levels (I1, I2) of the respective sub-areas (A1, A2).

## Patentansprüche

1. Verfahren zur Interferenzkoordination einer Zelle (C1) mit mindestens einer benachbarten Zelle (C2, C3) eines Funknetzwerks (1), wobei die Zelle (C1) das Verteilen ihrer Sendeleistung in räumlich aufgelöster Weise ermöglicht,
wobei das Verfahren umfasst:
Durchführen einer Ressourcenzuweisung (R1, R2) an eine Mobilstation (MS1, MS2), die sich in der Zelle (C1) befindet,
Bestimmen eines Maßes (M(I1), M(I2)) für einen Interferenzpegel (I1, I2) an einem Aufenthaltsort der Mobilstation (MS1, MS2) auf der Basis von in der Zelle (C1) verfügbaren Informationen, insbesondere auf der Basis einer Rückkopplung von der Mobilstation (MS1, MS2), wobei der Interferenzpegel (I1, 12) von den Ressourcenzuweisungen in der mindestens einen benachbarten Zelle (C2, C3) abhängt, und
Entscheiden, auf der Basis des Maßes (M(I1), M(I2)) für den Interferenzpegel (I1, I2), ob die momentane Ressourcenzuweisung (R1, R2) für die Mobilstation (MS1, MS2) beibehalten oder geändert werden soll,
**dadurch gekennzeichnet, dass**
der Schritt des Änderns der Ressourcenzuweisung (R1, R2) das Austauschen der momentanen Ressourcenzuweisung (R1) der Mobilstation (MS1) mit einer vorher durchgeführten Ressourcenzuweisung (R2) an eine weitere Mobilstation (MS2) der Zelle (C1) umfasst.

2. Verfahren nach Anspruch 1, wobei die weitere Mobilstation (MS2), welche für das Austauschen der Ressourcenzuweisung (R1) benutzt wird, nach dem Zufallsverfahren ausgewählt wird.

3. Verfahren nach einem beliebigen der vorstehenden Ansprüche, wobei die Ressourcenzuweisung (R1, R2) nur dann geändert wird, wenn das Maß (M(I1), M(I2)) des Interferenzpegels (I1, I2) einen Grenzwert (T) überschreitet, wobei, vorzugsweise, wenn der Grenzwert (T) überschritten wird, die Ressourcenzuweisung (R1, R2) mit einer Wahrscheinlichkeit, welche sich mit zunehmendem Interferenzpegel (I1, I2) erhöht, geändert wird.

4. Verfahren nach Anspruch 3, wobei das Maß (M(I1), M(I2)) für den Interferenzpegel (I1, I2) auf der Basis mindestens eines Parameters, ausgewählt aus der Gruppe bestehend aus: Einer Summeninterferenz, einem Signal-zu-Interferenz-RauschVerhältnis, SINR, insbesondere einer Differenz zwischen der Summeninterferenz und dem SINR, und einer Signalstärke innerhalb der Zelle (C1), bestimmt wird.

5. Verfahren nach einem beliebigen der vorstehenden Ansprüche, wobei mindestens ein Parameter für das Treffen der Entscheidung, insbesondere ein Grenzwert (T), dynamisch angepasst wird, wobei der Parameter vorzugsweise auf der Basis eines Gesamtinterferenzpegels (Iₒ) der Zelle (C1) angepasst wird.

6. Verfahren nach einem beliebigen der vorstehenden Ansprüche, weiterhin umfassend:
Signalisierungen von Informationen über eine Änderung der Ressourcenzuweisung (R1, R2) innerhalb der Zelle (C1) an mindestens eine der benachbarten Zellen (C2, C3).

7. Basisstation (BS1) für ein drahtloses Kommunikationsnetzwerk (1), umfassend:
Eine Sendeeinheit (2a) zum Erzeugen einer Zelle (C1), welche einen Funkabdeckungsbereich zum Bedienen mindestens einer Mobilstation (MS1, MS2) definiert, wobei die Sendeeinheit (2a) das Verteilen ihrer Sendeleistung in räumlich aufgelöster Weise ermöglicht,
eine Ressourcenzuweisungseinheit (4a) für das Durchführen einer Ressourcenzuweisung (R1, R2) an eine Mobilstation (MS1, MS2), welche sich in der Zelle (C1) befindet,
eine Bestimmungseinheit (6a) zum Bestimmen eines Maßes (M(I1), M(I2)) für einen Interferenzpegel (I1, I2) am Aufenthaltsort der Mobilstation (MS1, MS2) auf der Basis von Informationen, welche in der Basisstation (BS1) verfügbar sind, insbesondere von Rückkopplungsinformationen von der Mobilstation (MS1, MS2), wobei der Interferenzpegel (I1, I2) von Ressourcenzuweisungen in mindestens einer benachbarten Zelle (C2, C3) abhängt, und
eine Entscheidungseinheit (7a) zum Entscheiden, auf der Basis des Maßes (M(I1), M(I2)) für den Interferenzpegel (I1, I2), ob die momentane Ressourcenzuweisung (R1, R2) für die Mobilstation (MS1) beibehalten oder geändert werden soll,
**dadurch gekennzeichnet, dass**
die Ressourcenzuweisungseinheit (4a) dazu ausgelegt ist, die Ressourcenzuweisung (R1, R2) durch Austauschen der momentanen Ressourcenzuweisung (R1) der Mobilstation (MS1) mit einer vorher durchgeführten Ressourcenzuweisung (R2) an eine weitere Mobilstation (MS2) der Zelle (C1) zu ändern.

8. Basisstation nach Anspruch 7, wobei die Ressourcenzuweisungseinheit (4a) für das Auswählen der weiteren Mobilstation (MS2), welche für das Austauschen der Ressourcenzuweisung (R1) verwendet wird, nach dem Zufallsverfahren ausgelegt ist.

9. Basisstation nach einem beliebigen der Ansprüche 7 bis 8, wobei die Entscheidungseinheit (7a) dazu ausgelegt ist, die Ressourcenzuweisung nur dann zu ändern, wenn das Maß (M(I1), M(I2)) für den Interferenzpegel (I1, I2) einen Grenzwert (T) überschreitet, wobei, vorzugsweise, wenn der Grenzwert (T) überschritten wird, die Ressourcenzuweisung (R1, R2) mit einer Wahrscheinlichkeit, welche sich mit zunehmendem Interferenzpegel (I1, I2) erhöht, geändert wird.

10. Basisstation nach Anspruch 9, wobei das Maß (M(I1), M(I2)) für den Interferenzpegel (I1, I2) auf der Basis mindestens eines Parameters, ausgewählt aus der Gruppe bestehend aus: Einer Summeninterferenz, einem Signal-zu-Interferenz-Rausch-Verhältnis, SINR, insbesondere einer Differenz zwischen der Summeninterferenz und dem SINR, und einer Signalstärke innerhalb der Zelle (C1), bestimmt wird.

11. Basisstation nach einem beliebigen der Ansprüche 7 bis 10, wobei die Entscheidungseinheit (7a) für das dynamische Anpassen mindestens eines Parameters für das Treffen der Entscheidung, insbesondere eines Grenzwerts (T), ausgelegt ist, wobei der Parameter vorzugsweise auf der Basis eines Gesamtinterferenzpegels (Iₒ) der Zelle (C1) angepasst wird.

12. Funknetzwerk (1), umfassend mindestens zwei Basisstationen (BS1 bis BS3) gemäß einem beliebigen der Ansprüche 7 bis 11.

13. Funknetzwerk nach Anspruch 12, wobei die Basisstationen (BS1 bis BS3) für das Austauschen von Informationen über eine Änderung der Ressourcenzuweisung (R1, R2) in den assoziierten Zellen (C1 bis C3) ausgelegt sind, wobei die Informationen für das Bestimmen des Maßes (M(11), M(12)) für die Interferenzpegel (I1, I2) der jeweiligen Teilbereiche (A1, A2) berücksichtigt werden.

## Revendications

1. Procédé de coordination d'interférence d'une cellule (C1) avec au moins une cellule voisine (C2, C3) d'un réseau radio (1), la cellule (C1) permettant de distribuer sa puissance d'émission selon une résolution spatiale,
le procédé comprenant les étapes suivantes :
réaliser une affectation des ressources (R1, R2) à une station mobile (MS1, MS2) située dans la cellule (C1),
déterminer une mesure (M(I1), M(I2)) pour un niveau d'interférence (I1, I2) à un emplacement de la station mobile (MS1, MS2) en se basant sur des informations qui sont disponibles dans la cellule (C1), en particulier en se basant sur des informations de rétroaction provenant de la station mobile (MS1, MS2), le niveau d'interférence (I1, I2) dépendant des affectations des ressources dans l'au moins une cellule voisine (C2, C3), et
décider s'il faut garder ou changer l'affectation actuelle des ressources (R1, R2) pour la station mobile (MS1, MS2) en se basant sur la mesure (M(I1), M(I2)) pour le niveau d'interférence (I1, I2),
**caractérisé en ce que**
l'étape de changement de l'affectation des ressources (R1, R2) comprend l'échange de l'affectation actuelle des ressources (R1) de la station mobile (MS1) avec une affectation des ressources (R2) précédemment faite à une autre station mobile (MS2) de la cellule (C1).

2. Procédé selon la revendication 1, dans lequel l'autre station mobile (MS2), qui est utilisée pour échanger l'affectation des ressources (R1), est sélectionnée de manière aléatoire.

3. Procédé selon l'une quelconque des revendications précédentes, dans lequel l'affectation des ressources (R1, R2) n'est changée que lorsque la mesure (M(I1), M(I2)) du niveau d'interférence (I1, I2) dépasse une valeur de seuil (T), dans lequel, de préférence, lorsque la valeur de seuil (T) est dépassée, l'affectation des ressources (R1, R2) est changée avec une probabilité qui augmente avec l'augmentation du niveau d'interférence (I1, I2).

4. Procédé selon la revendication 3, dans lequel la mesure (M(I1), M(I2)) pour le niveau d'interférence (I1, I2) est déterminée en se basant sur au moins un paramètre sélectionné dans le groupe constitué : d'une interférence globale, d'un rapport signal sur interférence plus bruit, SINR, en particulier une différence entre l'interférence globale et le SINR, et d'une intensité de signal à l'intérieur de la cellule (C1).

5. Procédé selon l'une quelconque des revendications précédentes, dans lequel au moins un paramètre pour prendre la décision, en particulier une valeur de seuil (T), est ajusté dynamiquement, le paramètre étant de préférence ajusté en se basant sur un niveau d'interférence global (Iₒ) de la cellule (C1).

6. Procédé selon l'une quelconque des revendications précédentes, comprenant en outre l'étape suivante : signaler des informations sur un changement de l'affectation des ressources (R1, R2) à l'intérieur de la cellule (C1) à au moins une des cellules voisines (C2, C3).

7. Station de base (BS1) pour un réseau de communication sans fil (1), comprenant :
une unité d'émission (2a) pour générer une cellule (C1) définissant une zone de couverture radio pour desservir au moins une station mobile (MS1, MS2), l'unité d'émission (2a) permettant de distribuer sa puissance d'émission selon une résolution spatiale, une unité d'affectation des ressources (4a) pour réaliser une affectation des ressources (R1, R2) à une station mobile (MS1, MS2) disposée dans la cellule (C1), une unité de détermination (6a) pour déterminer une mesure (M(I1), M(I2)) pour un niveau d'interférence (I1, I2) à l'emplacement de la station mobile (MS1, MS2) en se basant sur des informations qui sont disponibles dans la station de base (BS1), en particulier des informations de rétroaction provenant de la station mobile (MS1, MS2), le niveau d'interférence (I1, I2) dépendant des affectations des ressources dans au moins une cellule voisine (C2, C3), et
une unité de décision (7a) pour décider s'il faut garder ou changer l'affectation actuelle des ressources (R1, R2) pour la station mobile (MS1) en se basant sur la mesure (M(I1), M(I2)) pour le niveau d'interférence (I1, I2) **caractérisée en ce que**
l'unité d'affectation des ressources (4a) est adaptée pour changer l'affectation des ressources (R1, R2) en échangeant l'affectation actuelle des ressources (R1) de la station mobile (MS1) avec une affectation des ressources (R2) précédemment faite à une autre station mobile (MS2) de la cellule (C1).

8. Station de base selon la revendication 7, dans laquelle l'unité d'affectation des ressources (4a) est adaptée pour sélectionner l'autre station mobile (MS2) qui est utilisée pour échanger l'affectation des ressources (R1) de manière aléatoire.

9. Station de base selon l'une quelconque des revendications 7 à 8, dans laquelle l'unité de décision (7a) est adaptée pour changer l'affectation des ressources uniquement lorsque la mesure (M(I1), M(I2)) pour le niveau d'interférence (I1, I2) dépasse une valeur de seuil (T), dans laquelle, de préférence, lorsque la valeur de seuil (T) est dépassée, l'affectation des ressources (R1, R2) est changée avec une probabilité qui augmente avec l'augmentation du niveau d'interférence (I1, I2).

10. Station de base selon la revendication 9, dans laquelle la mesure (M(I1), M(I2)) pour le niveau d'interférence (I1, I2) est déterminée en se basant sur au moins un paramètre sélectionné dans le groupe constitué : d'une interférence globale, d'un rapport signal sur interférence plus bruit, SINR, en particulier une différence entre l'interférence globale et le SINR, et d'une intensité de signal à l'intérieur de la cellule (C1).

11. Station de base selon l'une quelconque des revendications 7 à 10, dans laquelle l'unité de décision (7a) est adaptée pour ajuster dynamiquement au moins un paramètre pour prendre la décision, en particulier une valeur de seuil (T), le paramètre étant de préférence ajusté en se basant sur un niveau d'interférence global (Iₒ) de la cellule (C1).

12. Réseau radio (1) comprenant au moins deux stations de base (BS1 à BS3) selon l'une quelconque des revendications 7 à 11.

13. Réseau radio selon la revendication 12, dans lequel les stations de base (BS1 à BS3) sont adaptées pour échanger des informations sur un changement de l'affectation des ressources (R1, R2) dans les cellules associées (C1 à C3), les informations étant prises en compte pour déterminer la mesure (M(I1), M(I2)) pour les niveaux d'interférence (I1, I2) des sous-zones (A1, A2) respectives.
